(19) Europäisches Patentamt
European Patent Office
Office européen des brevets

(11) Veröffentlichungsnummer: **0 152 814**
**B1**

# (12) EUROPÄISCHE PATENTSCHRIFT

(45) Veröffentlichungstag der Patentschrift: **28.12.88**

(21) Anmeldenummer: **85100844.1**

(22) Anmeldetag: **28.01.85**

(51) Int. Cl.⁴: **C 08 F 220/58,** C 09 K 7/02 // (C08F220/58, 226:06, 220:58, 220:44)

## (54) Wasserlösliche Polymerisate und deren Verwendung als Bohrspüladditive.

(30) Priorität: **09.02.84 DE 3404491**

(43) Veröffentlichungstag der Anmeldung: **28.08.85 Patentblatt 85/35**

(45) Bekanntmachung des Hinweises auf die Patenterteilung: **28.12.88 Patentblatt 88/52**

(84) Benannte Vertragsstaaten: **DE FR GB IT NL SE**

(56) Entgegenhaltungen:
**EP-A- 0 023 712**
**EP-A- 0 044 508**
**US-A- 4 048 077**

(73) Patentinhaber: **Wolff Walsrode Aktiengesellschaft, Postfach, D-3030 Walsrode 1 (DE)**

(72) Erfinder: **Lange, Werner, Dr., Im Heidfeld 18, D-2722 Visselhövede (DE)**
Erfinder: **Böhmer, Branislav, Dr., Moorstrasse 45, D-3030 Walsrode (DE)**

(74) Vertreter: **Zobel, Manfred, Dr. et al, c/o BAYER AG Konzernverwaltung RP Patentabteilung Bayerwerk, D-5090 Leverkusen (DE)**

EP 0 152 814 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue wasserlösliche Copolymerisate, die zu 40–80 Mol.-% aus Resten der Formel I

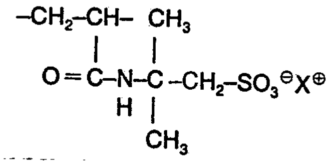
(I)

mit $X^{\oplus}$ Wasserstoff oder ein Kation, vorzugsweise Alkalimetallion, wie Natrium,

10–30 Mol.-% Resten der Formel II

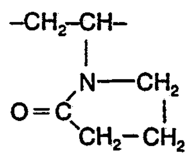
, (II)

0–30 Mol.-% Resten der Formel III

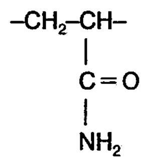
(III)

und
0–15 Mol.-% Resten der Formel IV

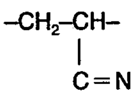
(IV)

und ihre Verwendung als Additive in Bohrspülflüssigkeiten, die insbesondere bei hohen Temperaturen und hohen Salzkonzentrationen Verwendung finden.

Die Herstellung wasserlöslicher Polymerisate, welche Sulfonsäuregruppen in den Polymerketten eingebaut enthalten, ist bereits in zahlreichen Patentschriften sowie in der Fachliteratur ausführlich beschrieben worden. So ist z.B. die Synthese von Copolymeren die Vinylsulfonsäure mit Acrylamid und Vinylpyrrolidon im Journal of Polymer Science, 38, 147 (1969) veröffentlicht worden. In DBP 110 1760 ist ein Verfahren zur Herstellung wasserlöslicher Copolymerisate aus Vinylsulfonsäure und Acrylnitril bzw. mit Methacrylnitril, gegebenenfalls im Gemisch mit weiteren ethylenisch ungesättigten Verbindungen, beschrieben worden. Copolymerisate aus Vinyl- bzw. Alkylsulfonaten mit Acrylamid und Vinylamiden sind z.B. in der DAS 2 444 108 offenbart.

Wasserlösliche Copolymerisate, welche 2-Acrylamido-2-Methylpropansulfonsäure (AMPS) als Comonomeres enthalten, sind in USP 3 953 342, 3 768 565, DOS 2 502 012, 2 547 773, USP 3 907 927, 3 926 718, 3 948 783 beschrieben. So lassen sich zum Beispiel gemäss den Angaben des USP 3 929 741 Copolymere aus Vinylpyrrolidon und AMPS herstellen, wobei diese Polymerisate aber wasserunlöslich sind.

Wasserlösliche Copolymerisate, die AMPS, Vinylimidazol-(1) oder Vinylimidazol-(2) und gegebenenfalls eine Reihe weiterer Monomerbausteine als Bestandteile enthalten können, sind in der PCT-Anmeldung WO 23/02449 aufgeführt.

Diese dort genannten Polymerisate können als hochtemperaturstabile Bohrspüladditive verwendet werden, die zwar beim Einsatz bei hohen Elektrolytkonzentrationen ihre Wirkung nicht einbüssen, aber zu zu hohen Wasserverlusten der Bohrspülung führen.

Erstrebenswert ist es aber, einen möglichst geringen Wasserverlust der Bohrspülung auch bei hohen Temperaturen und bei sehr hohen Salzgehalten zu erreichen. Dabei ist ein sogenannter API-Presswasserverlust unter 10 ml einzustreben.

Überraschenderweise gelingt es, mit den erfindungsgemässen Polymerisaten hochtemperaturstabile Schutzkolloide bereitzustellen, die selbst bei hohen Salzkonzentrationen nur geringe Presswasserverluste nach API aufweisen.

Diese ausgezeichnete Wirksamkeit der erfindungsgemässen Copolymerisate als Bohrspüladditive war völlig überraschend, da die Copolymerisate, die in der DE-OS 3 027 422 offenbart werden und aus der gleichen Monomerbausteine aufgebaut sind, bei einem Einsatz bei hohen Temperaturen zu völlig zubefriedigenden Resultaten führen.

Gegenstand der Erfindung sind daher wasserlösliche Polymerisate, die zu 40–80 Mol.-% aus Resten der Formel I:

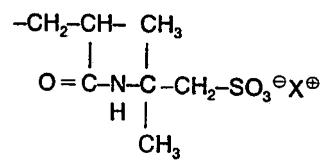
(I)

mit $X^{\oplus}$ $H^{\oplus}$ oder ein Kation, vorzugsweise Alkalimetallion wie $Na^{\oplus}$,
10–30 Mol.-% aus Resten der Formel II:

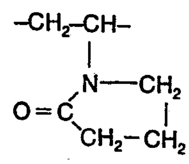
, (II)

0–30 Mol.-% aus Resten der Formel III:

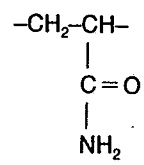
(III)

und
0–15 Mol.-% aus Resten der Formel IV:

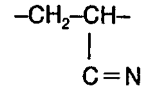
(IV)

bestehen, wobei die Reste I–IV im Polymerisat statistisch verteilt sind und jeweils 100 Mol.-% ergeben.

Ein weiterer Gegenstand der Erfindung ist die Verwendung der erfindungsgemässen Polymerisate als Schutzkolloide in Bohrspülmittel.

Bevorzugte erfindungsgemässe Copolymerisate sind aus 50–70 Mol.-% Resten der Formel I, 15–30 Mol.-% Resten der Formel II, 10–30 Mol.-% Resten der Formel III und 5–10 Mol.-% Resten der Formel IV aufgebaut.

Die erfindungsgemässen Polymerisate können in an sich bekannter Weise z. B. durch eine radikalische Polymerisation in wässriger Lösung hergestellt werden.

Die Polymerisation wird wie üblich in einer Schutzgasatmosphäre, vorzugsweise unter Stickstoff, durchgeführt. Die Polymerisationstemperaturen sollen zwischen 20 und 100 °C, vorzugsweise 30–60 °C liegen.

Die Polymerisation kann durch die üblichen Polymerisationsinitiatoren gestartet werden, z.B. $K_2S_2O_8$, $H_2O_2$, $(NH_4)_2S_2O_8$, $H_2O_2$/Isoascorbinsäuregemisch. Pro 100 g Gesamtmonomere werden in der Regel 0,05–1 g Polymerisationsinitiator eingesetzt.

Zur Durchführng der Polymerisate werden die Monomeren mit einer Konzentration von 20–30 Gew.-% in Wasser gelöst und nach einer Stickstoffspülung wird die Reaktion gestartet. Aus der wässrigen Lösung wird das erfindungsgemässe Copolymerisat durch Abdestillieren des Wassers oder Ausfällen mit einem wassermischbaren, organischen Lösungsmittel, wie Methanol, Ethanol, Aceton oder dergleichen, isoliert. Vorzugsweise wird jedoch die das Reaktionsprodukt erhaltene wässrige Lösung direkt, evtl. nach Einstellen einer gewünschten Konzentration, als Schutzkolloid in Bohrspülungen eingesetzt.

Die erfindungsgemässen Copolymerisate sind hervorragend geeignet als Hilfsmittel bei Bohrspülungen. Sie zeigen dabei eine sehr gute Schutzkolloidwirkung sowohl bei hohen Temperaturen als auch bei hohen Elektrolytkonzentrationen. Sie können daher als Schutzkolloid für den Einsatz in hochtemperaturstabilen und hochsalinaren Bohrspülungssystemen verwendet werden.

Üblicherweise werden zur Formulierung der wässrigen Bohrspülungen die erfindungsgemässen Copolymerisate in Konzentrationen von 0,5 bis 50 kg/m$^3$, vorzugsweise 3 bis 30 kg/m$^3$, eingesetzt. Den wässrigen Bohrspülungen werden zur Viskositätserhöhung und Abdichtung durchbohrter Formationen vorwiegend Bentonite und zur Dichteerhöhung der Bohrschlämme Schwertspat, Kreide und Eisenoxide zugesetzt.

Je nach den zu durchbrechenden Formationen können Bentonit, Schwertspat, Kreide und Eisenoxid allein oder in verschiedensten Mischungsverhältnissen den Bohrspülungen zugegeben werden.

Beispiel 1

In einem 1 l Polymerisationskolben mit Rührer, Rückflusskühler und Gaseinleitrohr für Inertgas werden 240 g entionisiertes Wasser vorgelegt. Danach werden 142,54 g einer 50%igen Lösung von 2-Acrylamido-2-Methylpropannatriumsulfonat zugegeben. Diese Menge entspricht 0,3442 Mol AMPS.

Anschliessend werden 15,28 g 1-Vinylpyrrolidon-2, entsprechend 0,1377 Mol, und 32,63 g 30%ige Acrylamidlösung, entsprechend 0,1377 Mol, zugegeben. Danach werden 3,66 g Acrylnitril, entsprechend 0,0689 Mol, zugegeben.

Diese Monomermengen entsprechen einer Zusammensetzung von 50 mol-% AMPS, 20 mol-% 1-Vinylpyrrolidon-2, 20 mol-% Acrylamid und 10 mol-% Acrylnitril.

Nach dem Ende der Zugaben wird mit einer Geschwindigkeit von 350–400 Upm gerührt und mit ca. 10 l/Std. Stickstoff gespült, um den Sauerstoff aus der Lösung zu verdrängen. Diese Stickstoffspülung wird während der gesamten Reaktionszeit beibehalten. Der Restsauerstoffgehalt beim Start der Polymerisation liegt vorteilhaft zwischen 1,2 und 1,8 ppm. Der pH-Wert des Reaktionsgemisches liegt bei etwa 8,5. Das Reaktionsgemisch wird auf 33 °C erwärmt.

Nach einer zehnminütigen Stickstoffspülung mit ca. 10 l/Std. wird die Polymerisationsreaktion durch Zugabe von 0,05% $K_2S_2O_8$ (alle Initiatormengen sind bezogen auf die Gesamtmonomereinwaage) gestartet. Nach etwa 1 Stunde erfolgt ein Viskositätsanstieg und nach 2 Stunden werden 30 ml entionisiertes Wasser zur Verdünnung zugegeben. Durch weitere Initiatorzugaben nach 4 Stunden (0,05% $K_2S_2O_8$), 8 Stunden (0,15% $K_2S_2O_8$), 10 Stunden (0,025% $H_2O_2$ und 0,025% Isoascorbinsäure) und 12 Stunden (0,025% $H_2O_2$ und 0,025% Isoascorbinsäure), wird die Reaktion zu Ende geführt.

Nach dem Ende der Reaktion werden 0,26 g 25%ige Natronlauge und 17 ml Wasser zugegeben. Der pH-Wert steigt durch diese Zugaben auf 6,8.

Das erhaltene Endprodukt ist durch folgende Angaben charakterisiert:

| | |
|---|---|
| pH-Wert | = 6,8 |
| Konzentration | = 20,0 Gew.-% |
| relative Viskosität (VT 24 Haake) | = 30.000 mPa.s |
| Grenzviskosität (GVZ) | = 4,00 g · dl$^{-1}$ |

Die Polymerisate 2 und 3, deren Zusammensetzungen Tabelle I zu entnehmen sind, können analog zu Beispiel 1 hergestellt werden.

Beispiel 4

Für die Polymerisation wird eine wie in Beispiel 1 beschriebene Apparatur eingesetzt. Im Polymerisationskolben werden 230 g entionisiertes Wasser vorgelegt. Danach werden 138,90 g 50%ige AMPS-Lösung, entsprechend 0,3355 Mol, zugegeben.

Anschliessend erfolgt die Zugabe von 39,76 g 30%iger Acrylamidlösung, entsprechend 0,1678 Mol, und 18,63 g 1-Vinylpyrrolidon-2, entsprechend 0,1678 Mol.

Aus diesen Monomereinwaagen resultiert folgende Zusammensetzung: 50 Mol-% AMPS, 25 Mol-% Acrylamid, 25 Mol-% 1-Vinylpyrrolidon-2.

Zur Regulierung der Kettenlänge werden noch 0,004% Hydrochinon, bezogen auf die Gesamtmonomereinwaage, zugesetzt.

Der pH-Wert der Reaktionsmischung liegt bei etwa 8,5.

Nach der Beendigung der Zugaben wird die Lösung mit 350–400 Upm gerührt und auf 34 °C aufgeheizt. Danach wird durch das Stickstoffeinleitrohr ein Stickstoffstrom von ca. 10 l/Std. in die Reaktionslösung eingeleitet. Diese Stickstoffspülung wird während der gesamten Reaktionszeit beibehalten. Der Restsauerstoffgehalt der Lösung beim Start der Polymerisation liegt vorteilhaft zwischen 1,2 und 1,8 ppm.

Nach einer zehnminütigen Stickstoffspülung wird die Reaktion mit 0,05 g $K_2S_2O_8$ (bezogen auf die Monomereinwaage) gestartet. Nach etwa 2 Stunden erfolgt ein Viskositätsanstieg. Durch weitere Initiatorzugaben nach 3 Stunden (0,05 $K_2S_2O_8$), 6 Stunden (0,05% $K_2S_2O_8$), 8 Stunden (0,15% $K_2S_2O_8$), 10 Stunden (0,025% $H_2O_2$ und 0,025% Isoascorbinsäure) und 12 Stunden (0,025% $H_2O_2$ und 0,025 Isoascorbinsäure), wird die Reaktion zu Ende geführt.

Nach der Beendigung der Reaktion werden 0,3 g 25%ige Natronlauge und 52 ml Wasser zugegeben.

Das erhaltene Endprodukt ist durch folgende Angaben charakterisiert:

| | |
|---|---|
| pH-Wert | = 7,2 |
| Konzentration | = 20,0 Gew.-% |
| relative Viskosität (VT 24 Haake) | = 9.000 mPa.s |
| Grenzviskosität (GVZ) | = 3,07 g · $dl^{-1}$ |

In analoger Weise können die Copolymerisate 5–18, deren Zusammensetzung der Tabelle I zu entnehmen sind, hergestellt werden.

Durch Veränderungen des pH-Wertes beim Start und der Startinitiatormenge entstehen Polymerisate mit unterschiedlichen Grenzviskositätszahlen (GVZ).

In der Tabelle werden folgende Abkürzungen verwendet:

| | |
|---|---|
| AMPS: | 2-Acrylamido-2-Methyl-Propansulfonsäure |
| NVPy: | 1-Vinylpyrrolidon-2 |
| AAm: | Acrylamid |
| AN: | Acrylnitril |
| GVZ: | Grenzviskositätszahlen, die in einer 0,1-normalen NaCl-Lösung bei 25 °C bestimmt wurde. |

Tabelle I

| Beispiel Nr. | mol.-% AMPS | mol.-% NVPy | mol.-% AAm | mol.-% AN | Hydrochinon-Zusatz %* | pH-Wert b. Start | Viskosität mPs·s | GVZ $gdl^{*1}$ |
|---|---|---|---|---|---|---|---|---|
| 1 | 50 | 20 | 20 | 10 | | 8,3 | 30.000 | 4,00 |
| 2 | 50 | 20 | 20 | 10 | | 7,0 | 12.000 | 3,40 |
| 3 | 50 | 20 | 20 | 10 | | 10,0 | 58.000 | 4,65 |
| 4 | 50 | 25 | 25 | | 0,004 | 8,5 | 9.000 | 3,07 |
| 5 | 50 | 25 | 25 | | 0,001 | 8,5 | 30.000 | 4,10 |
| 6 | 50 | 25 | 25 | | | 7,0 | 8.000 | 3,08 |
| 7 | 50 | 25 | 25 | | | 10,0 | 26.000 | 4,15 |
| 12 | 40 | 30 | 30 | | | 7,0 | 900 | 1,82 |
| 13 | 40 | 30 | 30 | | | 8,6 | 9.000 | 3,00 |
| 14 | 80 | 15 | 5 | | | 7,0 | 62.000 | 5,75 |
| 15 | 60 | 20 | 20 | | | 8,7 | 39.000 | 5,70 |
| 16 | 60 | 30 | 10 | | | 8,7 | 24.000 | 4,80 |
| 17 | 70 | 15 | 15 | | | 8,7 | 54.000 | 5,05 |
| 18 | 70 | 10 | 20 | | | 8,6 | 59.000 | 6,00 |

* Diese Prozentangabe bezieht sich auf die eingesetzte Gesamtmonomereinwaage.

In den nachfolgenden Anwendungsbeispielen werden die erfindungsgemässen Polymerisate mit bekannten Bohrspüladditiven verglichen.

Als Beurteilungskriterium der mit verschiedenen Schutzkolloiden hergestellten Bohrschlämme dient ihre Filtrierbarkeit nach API-Code 29. Die Güte der Bohrschlämme und damit die Wirkung der Schutzkolloide wird nach dem Wasserverlust bei dem Filtrierversuch beurteilt.

Unter Wasserverlust ist hierbei die Menge Wasser zu verstehen, welche durch eine in der oben genannten Vorschrift genau definierten Filterpresse in einer bestimmten Zeiteinheit (30 min) bei einem bestimmten vorgegebenen Druck (7 kg/$cm^2$) hindurchläuft. Je geringer die hindurchlaufende Wassermenge ist, um so besser ist die Beständigkeit der Bohrspülung. Die Prüfungen werden bei Raumtemperatur durchgeführt. Da die Messung des Wasserverlustes in der Zeit von 0–30 min schlecht reproduzierbare Werte ergab, wurde als API-Wasserverlust das Doppelte der Wassermenge, die in der Zeit von 7,5 bis 30 min nach dem Anlegen des Prüfdruckes aus der Spülung austritt, angegeben. Diese Werte sind reproduzierbar.

Neben dem API-Test wird dem Hochdruck-Hochtemperatur-(HT-HP)-Wasserverlust in jüngster Zeit eine grössere Bedeutung beigemessen,

weil man davon ausgeht, dass dieser Wert die tatsächlichen Verhältnisse im Bohrloch besser wiedergeben kann. Zur Durchführung dieses Tests wird die bereits 15 Stunden bei 180 °C belastete Spülung in einer Prüfbombe auf 150 °C aufgeheizt. Der Filtrationsversuch wird mit einem Druck von 35 bar bei der Temperatur von 150 °C durchgeführt. Wegen der oben schon erläuterten besseren Reproduzierbarkeit wurde auch beim HT/HP-Test die doppelte Wassermenge, die zwischen 7,5 und 30 min nach dem Anlegen des Prüfdruckes aus der Spülung austritt, als HT/HP-Wasserverlust angegeben. Auch dieser Wasserverlust sollte möglichst gering sein.

Für die Untersuchungen wurden folgende Mischpolymerisate eingesetzt:

A: Copolymerisat hergestellt aus 50 mol-% AMPS, 20 mol-% 1-Vinylpyrrolidon-2, 20 mol-% Acrylamid und 10 mol-% Acrylnitril (Beispiel 1, Tabelle I).

B: Copolymerisat hergestellt aus 50 mol-% AMPS, 25 mol-% 1-Vinylpyrrolidon-2 und 25 mol-% Acrylamid. (Beispiel 4, Tabelle I).

C: Copolymerisat, bestehend aus 20,87 mol-% (≙40 Gew.-%) AMPS, 22,40 mol-% (≙22 Gew.-%) 1-Vinylpyrrolidon-2 und 57,73 mol-% (≙38 Gew.-%) Acrylamid (Vergleichsprodukt gemäss DE-OS 3 047 422 A 1).

Prüfbedingungen:

Bei allen Beispielen wurde folgende Spülmittelrezeptur eingesetzt:

| | | | |
|---|---|---|---|
| 500 | g | $H_2O$ | |
| 10 | g | Salt Water Drillung Clay (SWDC) Fa. Engelhard Minerals and Chemicals Division, Menlo Park, New Jersey, 08817, USA | = 2 % |
| 10 | g | Bentonit | = 2 % |
| 50 | g | Kreide, Mikrosöhl | = 10 % |
| 20 | g | Schutzkolloid, 100%ig, gemäss Anwendungsversuchen A–C | = 4 % |
| 85 | g | NaCl | = 17 % |
| 7 | g | KCl | = 1,4% |
| 50 | g | $CaCl_2 \cdot H_2O$ | = 10 % |
| 15 | g | $MgCl_2 \cdot 6\ H_2O$ | = 3 % |
| 1,5 | g | NaOH | |
| 0,5 | g | handelsüblicher Entschäumer z. B. J 647 G, der Fa. Schill & Seilacher, Hamburg | |

Alle Prozentangaben der Spülmittel sind bezogen auf die Wassermenge.

Es wurden die Wasserverluste nach API bei Raumtemperatur und nach einer Lagerung von 15 h bei 180 °C gemessen. Zusätzlich wurde der oben beschriebene Hochtemperatur- und Hochdruck-(HT/HP)-Filtrationstest durchgeführt. Die Ergebnisse sind in Tabelle II dargestellt:

Tabelle II

| Schutzkolloid | Wasserverlust analog zur API: bei Normalbedingungen (7,5′–30′) × 2 in ml | Wasserverlust analog zur API: nach Alterung 15 h 180 °C (7,5′–30′) × 2 in ml | HT/HP-Wasserverlust nach Alterung 15 h 180 °C (7,5′–30′) × 2 in ml |
|---|---|---|---|
| A | 3,8 | 3,8 | 16 |
| B | 3,0 | 4,6 | 16 |
| C | 3,2 | 100 | Totalverlust |

Die Ergebnisse der anwendungstechnischen Tests zeigen eindeutig die hohe Wirksamkeit der erfindungsgemässen Additive A und B gegenüber dem Vergleichsprodukt C. Das Vergleichsprodukt C versagt nach der Temperaturbelastung völlig.

Im für dieses Anwendungsgebiet entscheidenden HT/HP-Test werden mit den erfindungsgemässen Produkten A und B in dieser extrem salzhaltigen Spülung mit einem hohen Anteil an zweiwertigen Kationen sehr niedrige Wasserverluste

erreicht, während das Vergleichsprodukt C einen Totalverlust erleidet.

**Patentansprüche**

1. Wasserlösliche Polymerisate, bestehend aus 40–80 Mol-% Resten der Formel I:

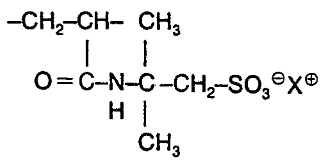

(I)

mit $X^{\oplus}$ ein Kation oder ein Wasserstoffion 10–30 Mol-% Resten der Formel II:

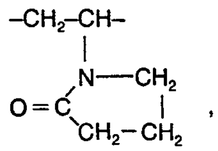

(II)

0–30 Mol-% Resten der Formel III:

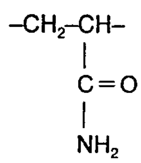

(III)

und 0–15 Mol-% Resten der Formel IV:

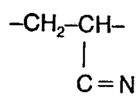

(IV)

wobei Reste I–IV im Polymerisat statistisch verteilt sind und die Summe der Mol-% I–IV immer 100 ergeben muss.

2. Wasserlösliche Polymerisate nach Anspruch 1, dadurch gekennzeichnet, dass sie aus 50–70 Mol-% Resten der Formel I, 15–30 Mol-% Resten der Formel II, 10–30 Mol-% Resten der Formel III und 5–10 Mol-% Resten der Formel IV aufgebaut sind.

3. Wasserlösliche Polymerisate nach Anspruch 1 oder 2, dadurch gekennzeichnet, dass das Kation in der Formel I $Na^{\oplus}$ ist.

4. Bohrspülhilfsmittel auf Basis der Polymerisate nach Ansprüchen 1–3.

5. Wässrige Bohrspülungen enthalten 0,5–50 $kg/m^3$ der Polymerisate nach Ansprüchen 1–3.

6. Bohrspülungen nach Anspruch 5, dadurch gekennzeichnet, dass sie noch Bentonite, Schwerspat, Kreide und/oder Eisenoxide enthalten.

**Claims**

1. Water-soluble polymers consisting of from 40 to 80 mole percent of residues corresponding to the following formula

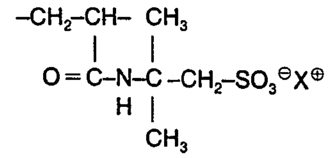

(I)

in which $X^{\oplus}$ is a cation or a hydrogen ion, from 10 to 30 mole percent of residues corresponding to the following formula

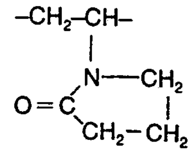

(II)

from 0 to 30 mole percent of residues corresponding to the following formula

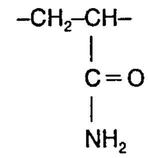

(III)

and from 0 to 10 mole percent of residues corresponding to the following formula

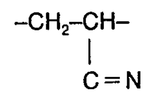

(IV)

residues I to IV being statiscally distributed in the polymer and the sum of the mole % of I–IV always having to amount to 100.

2. Water-soluble polymers as claimed in claim 1, characterised in that they consist of 50–70 mole % of residues corresponding to formula I, 15–30 mole % of residues corresponding to formula II, 10–30 mole % of residues corresponding to formula III and 5–10 mole % of residues corresponding to formula IV.

3. Water-soluble polymers as claimed in claim 1 or 2, characterised in that the cation in formula I is $Na^{\oplus}$.

4. Drilling fluid additives based on the polymers claimed in claims 1 to 3.

5. Aqueous drilling fluids containing 0.5 to 50 $kg/m^3$ of the polymers claimed in claims 1 to 3.

6. Drilling fluids as claimed in claim 5, characterised in that thes also contain bentonite, heavy spar, chalk and/or iron oxides.

**Revendications**

1. Polymères solubles dans l'eau consistant en: 40 à 80 moles% de motifs de formule I

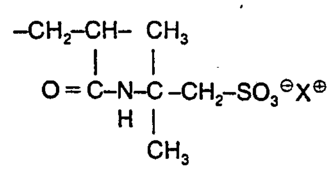

(I)

dans laquelle $X^{\oplus}$ représente un cation ou un ion hydrogène, 10 à 30 moles% de motifs de formule II

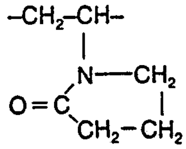

(II)

0 à 30 moles% de motifs de formule III

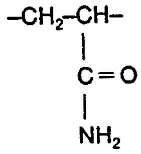

(III)

et 0 à 15 moles% de motifs de formule IV

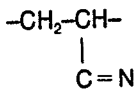

(IV)

les motifs I à IV étant en répartition statistique dans le polymère et la somme des proportions en moles% des motifs I à IV représentant dans tous les cas 100%.

2. Polymères solubles dans l'eau selon la revendication 1, caractérisés en ce qu'ils sont constitués de 50 à 70 moles% de motifs de formule I, 15 à 30 moles% de motifs de formule II, 10 à 30 moles% de motifs de formule III et 5 à 10 moles% de motifs de formule IV.

3. Polymères solubles dans l'eau selon la revendication 1 ou 2, caractérisés en ce que le cation de la formule I est le cation $Na^{\oplus}$.

4. Produit auxiliaire de rinçage de puits de forage à base de polymères selon les revendications 1 à 3.

5. Liquides aqueux de rinçage de puits de forage contenant, 0,5 à 50 $kg/m^3$ des polymères selon les revendications 1 à 3.

6. Liquides de rinçage de puits de forage selon la revendication 5, caractérisés en ce qu'ils contiennent en outre des bentonites, de la barytine, de la craie et/ou des oxydes de fer.